(19) Europäisches Patentamt

European Patent Office

Office européen des brevets

(11) Numéro de publication: **0 233 095 B1**

(12) **FASCICULE DE BREVET EUROPEEN**

(45) Date de publication de fascicule du brevet: **10.03.93**

(51) Int. Cl.⁵: **G01S 7/295**

(21) Numéro de dépôt: **87400037.5**

(22) Date de dépôt: **09.01.87**

(54) **Transformateur numérique d'images pour homogénéisation d'une image issue d'une conversion de coordonnées.**

(30) Priorité: **10.01.86 FR 8600321**

(43) Date de publication de la demande:
**19.08.87 Bulletin 87/34**

(45) Mention de la délivrance du brevet:
**10.03.93 Bulletin 93/10**

(84) Etats contractants désignés:
**DE GB IT NL SE**

(56) Documents cités:
**EP-A- 0 071 923**
**EP-A- 0 071 924**
**EP-A- 0 107 595**
**FR-A- 2 315 702**
**FR-A- 2 493 649**

**ACOUSTICAL IMAGING, vol. 8, Ultrasonic Visualization and Characterization, Key Biscayne, 29 mai - 2 juin 1978, Proceedings of the International Symposium on Acoustical Holography and Imaging, pages 1-14, Plenum Press, New York, US; J.T. WALKER: "Digital scan conversion and smoothing for a real time linear array imaging system"**

(73) Titulaire: **THOMSON-CSF**
**51, Esplanade du Général de Gaulle**
**F-92800 Puteaux(FR)**

(72) Inventeur: **Andrieu, Jean-Pierre**
**THOMSON-CSF SCPI 19, avenue de Messine**
**F-75008 Paris(FR)**
Inventeur: **Gault, Dominique**
**THOMSON-CSF SCPI 19, avenue de Messine**
**F-75008 Paris(FR)**
Inventeur: **Henri, Jean-Claude**
**THOMSON-CSF SCPI 19, avenue de Messine**
**F-75008 Paris(FR)**

(74) Mandataire: **Benoit, Monique et al**
**THOMSON-CSF, SCPI, B.P. 329, 50, rue Jean-Pierre Timbaud**
**F-92402 Courbevoie Cédex (FR)**

## Description

L'invention a pour objet un transformateur numérique d'images, souvent appelé TDI (pour Transformateur Digital d'Images), dans lequel l'image, issue de la conversion de coordonnées polaires en coordonnées cartésiennes, est homogénéisée par remplissage.

Dans certaines applications, comme la visualisation d'informations radar sur un écran à balayage en mode télévision, les informations sont fournies dans un système de coordonnées (polaires dans cet exemple) qui n'est pas celui du dispositif de visualisation (coordonnées cartésiennes dans le cas du balayage télévision). On procède donc à une conversion de coordonnées. Dans l'exemple précédent elle est faite par un TDI.

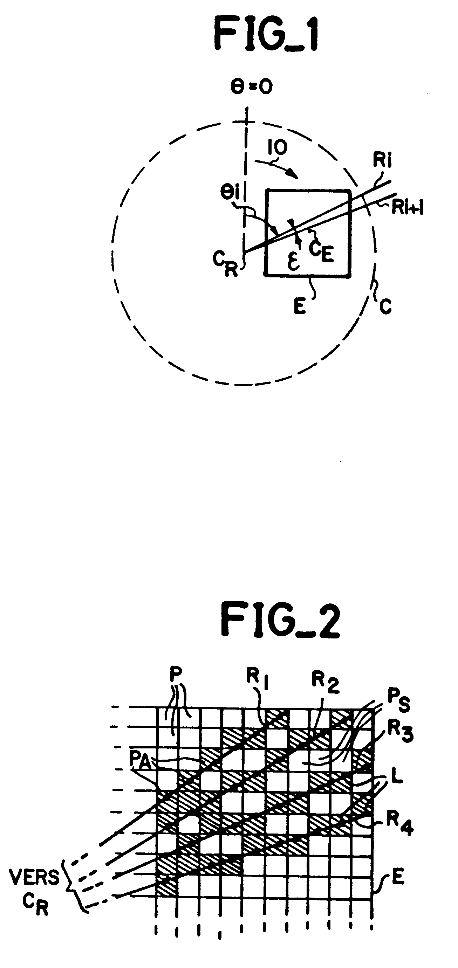

Toutefois, lorsque le processus de conversion et/ou de visualisation est en outre quantifié, comme c'est le cas pour un TDI et son écran télévision, il peut arriver que la conversion fasse apparaître des tâches sombres au milieu d'une zone lumineuse (dans le cas d'un écran télévision), comme expliqué plus en détail ci-après (figure 2). Cela donne un aspect "mité" à l'image. 11 est donc souhaitable d'homogénéiser l'image à ce niveau en "remplissant" les tâches sombres, c'est-à-dire en leur affectant une luminosité non nulle. Ce processus de correction de défauts est connu sous le nom de "pixel filling" dans la littérature anglo-saxonne.

Dans le cadre du TDI, une solution est connue. On rappelle qu'un TDI comporte une mémoire, dite mémoire image, qui contient l'image telle qu'elle doit être visualisée sur l'écran, un certain nombre de bits de cette mémoire étant affectés à chacun des points de l'écran, appelés "pixels", considérés comme distincts. La solution consiste à attribuer aux pixels non adressés par la conversion, donc sombres, une valeur de luminosité non nulle qui est fonction de celle des pixels adjacents, par exemple celle des huit pixels qui entourent le pixel considéré. Cette solution se heurte vite à des limites, notamment liées à la complexité et au coût, lorsque les vitesses de traitement doivent être grandes comme c'est souvent le cas pour un radar.

On connaît également, du document EP-A-71.924, une solution pour améliorer la visualisation d'une image figée dans un système scanner ultrasonique. Elle consiste principalement à créer des vecteurs intermédiaires de façon à doubler chaque pixel lorsque l'image est figée.

La présente invention a pour objet des moyens de remplissage des pixels non atteints par la conversion, qui soient simples à réaliser.

Plus précisément, l'invention a pour objet un transformateur numérique d'image assurant l'homogénéisation d'une image, tel que défini par la revendication 1.

D'autres objets, particularités et résultats de l'invention ressortiront de la description suivante, illustrée par les dessins annexes qui représentent :

- la figure 1, un schéma illustrant la zone couverte par un radar et la partie de cette zone qui est visualisée ;
- la figure 2, un schéma illustrant le mécanisme par lequel la conversion de coordonnées polaires en coordonnées cartésiennes fait apparaître des zones sombres ;
- la figure 3, le schéma synoptique d'un TDI ;
- la figure 4, un mode de réalisation d'une partie du TDI de la figure précédente ;
- la figure 5, un premier mode de mise en oeuvre de l'invention ;
- la figure 6, un deuxième mode de mise en oeuvre de l'invention ;
- les figures 7 et 8, le schéma de deux variantes de la figure précédente ;
- la figure 9, un schéma explicatif relatif à la figure 8.

Sur ces différentes figures, les mêmes références se rapportent aux mêmes éléments.

La figure 1 est donc un schéma illustrant la zone couverte par un radar et la partie de cette zone qui est visualisée.

Sur cette figure, on a représenté le centre radar $C_R$ et un cercle C illustrant la portée du radar, limitant la zone couverte par ce dernier. On a représenté également un rectangle (ou carré) E, de centre $C_E$, qui correspond à la partie de la zone C qui doit être visualisée. A titre d'exemple, les points $C_R$ et $C_E$ ne sont pas confondus.

Ainsi qu'il est connu, l'antenne du radar tourne dans un plan horizontal et sa direction est repérée (angle $\theta$) par rapport à une direction de référence, en général le Nord, figurée sur la figure par un pointillé $\theta$ = 0. Le sens de rotation de l'antenne est figuré par une flèche 10 : c'est par exemple le sens des aiguilles d'une montre. La position de l'antenne est fournie au récepteur radar sous forme, d'une part, d'un top (N) fourni à chaque passage du faisceau radar au Nord et, d'autre part, d'un signal d'incrément d'angle ($\epsilon$) indiquant que le faisceau a tourné d'un $n^{ème}$ de tour par rapport à l'incrément précédent, si n incréments correspondent à 360°.

2

Par ailleurs, le radar émet périodiquement des impulsions et reçoit un signal vidéo constitué par l'ensemble des réponses (échos) à chacune des impulsions. En ce qui concerne la visualisation, le signal vidéo affecté à chacune des directions $\theta_i$ successives de l'antenne est visualisé le long des rayons du cercle C, de centre $C_R$, faisant des angles successifs $\theta_i$ avec le Nord, et l'information ainsi visualisee est appelée radiale. On a représenté sur la figure deux radiales successives : $R_i$, faisant un angle $\theta_i$ avec la direction de référence, et $R_{i+1}$ faisant un angle $\theta_{i+1}$ avec la même référence, avec $\theta_{i+1} = \theta_i + \epsilon$.

Cette information est visualisée sur un écran du type balayage télévision, comportant un nombre prédéfini de pixels, par exemple 1024 lignes de 1024 pixels chacune. Cette visualisation nécessite de convertir en coordonnées cartésiennes les informations précédentes, fournies donc en coordonnées polaires.

Toutefois, comme mentionné plus haut, cette conversion est telle que tous les pixels peuvent ne pas être atteints. Ce cas de figure est illustré sur la figure 2.

Figure 2, on a donc représenté une portion de l'écran E, par exemple la partie extrême située en haut et à droite de l'écran. On a divisé la surface de l'écran E en carrés élémentaires représentant les différents pixels, rangés en lignes et en colonnes et repérés P.

On a également représenté à titre d'exemple quatre radiales, repérées $R_1$ à $R_4$, et, sur chacune des radiales, des points lumineux L représentant différents échos fournis par exemple par une même cible. Une visualisation directe de l'information en coordonnées polaires, visualisation du type PPI (pour Plan Position Indicator en Anglais), fournirait donc une tâche lumineuse sensiblement homogène.

On a par ailleurs hachuré les pixels atteints par la conversion de coordonnées et donc , dans le cas présent, lumineux ; ils sont notés $P_A$. On constate que lorsque les radiales R sont suffisamment divergentes, c'est-à-dire lorsque l'on se place suffisamment loin du centre radar $C_R$, il apparaît des pixels, repérés $P_S$, qui ne sont pas atteints par la conversion de coordonnées et qui resteront donc sombres, alors que les pixels atteints ($P_A$) sont lumineux. Il en ressort qu'une même cible n'apparaît plus sous forme d'une zone lumineuse sensiblement homogène mais présente des tâches sombres lui donnant un aspect "mité". C'est cette apparence "mitée" que le procédé d'homogénéisation par remplissage selon l'invention vise à faire disparaître.

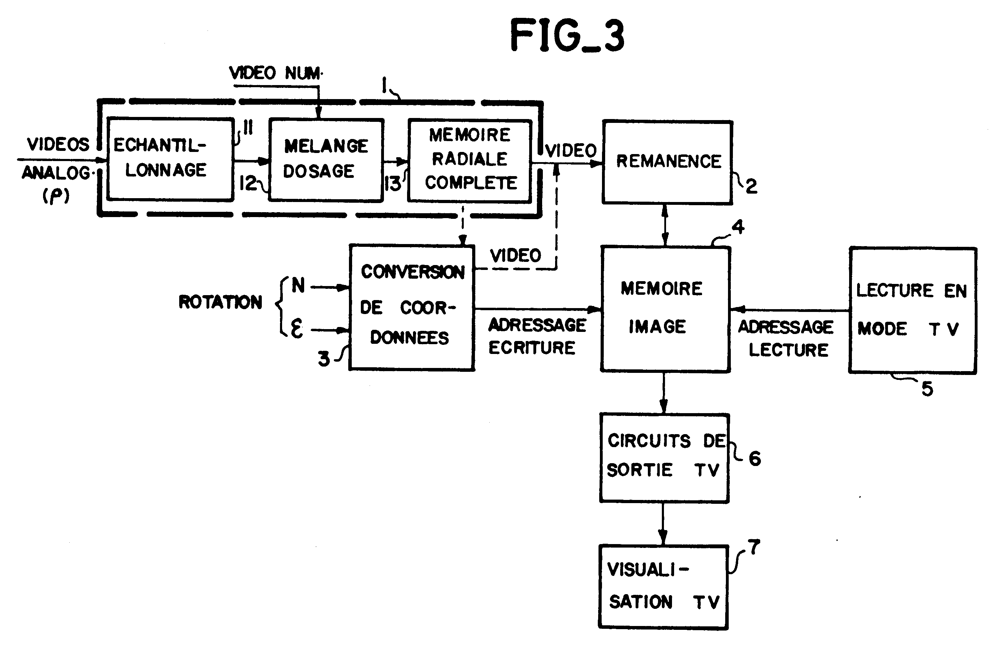

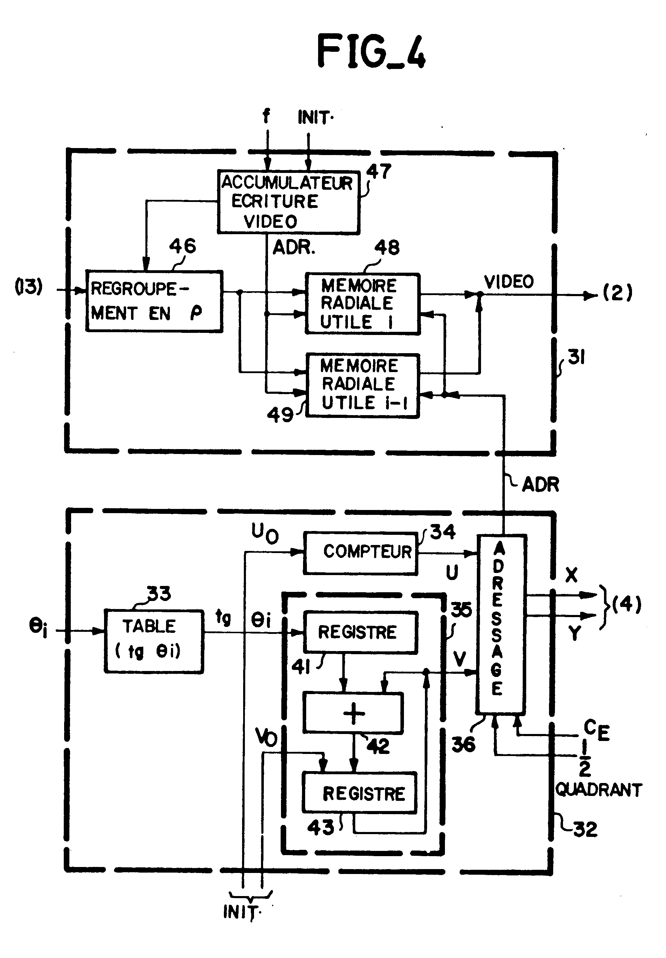

Avant de décrire ce procédé en détail, on rappelle ci-après, en relation avec les figures 3 et 4, la structure classique d'un transformateur numérique d'image.

Le TDI représenté sur le synoptique de la figure 3 comporte principalement :
- un moniteur de télévision 7, sur lequel les informations radar sont visualisées ;
- une mémoire 4, appelée mémoire image, contenant sous forme numérique l'image qui sera affichée sur le moniteur 7 ; la capacité de la mémoire 4 est adaptée au standard de télévision utilisé, c'est-à-dire qu'elle doit comporter autant de "cases" mémoires que l'image affichée sur moniteur comporte de pixels, avec un nombre de bits par case qui est fonction du nombre de niveaux de luminosité souhaité (souvent trois bits soit huit niveaux) ; la phase de lecture du contenu de la mémoire 4, à destination du moniteur de télévision 7, et la phase d'écriture dans la mémoire 4 de l'information radar, fournie par un ensemble 2, sont asynchrones : la lecture est prioritaire et, pendant une phase de lecture, l'écriture est arrêtée ;
- un ensemble 1 de circuits de traitement des signaux vidéos provenant du radar et reçus par le TDI, décrit plus en détail ci-après ;
- un ensemble 3 assurant la conversion des coordonnées polaires en coordonnées cartésiennes à cet effet, l'ensemble 3 reçoit le signal représentatif de la rotation de l'antenne du radar, à savoir la direction de référence N et l'incrément d'angle $\epsilon$ (ou, directement, la valeur de l'angle $\theta$) ; l'ensemble 3 assure donc l'adressage en écriture de la mémoire image 4, l'ensemble de traitement 1 fournissant, par l'intermédiaire d'un ensemble 2, l'information vidéo à inscrire en mémoire image 4, en synchronisme avec l'adressage ;
- un ensemble 2 de circuits dit de rémanence artificielle, qui a pour rôle de créer pour les informations numériques mémorisées dans la mémoire 4, pour lesquelles il n'existe pas de modifications dues au vieillissement, un effet de rémanence comparable à celui qui est produit sur un tube rémanent où la brillance d'un point commence à décroître dès qu'il est inscrit ;
- un ensemble 5 de circuits de lecture en mode télévision, assurant l'adressage en lecture de la mémoire image 4 ;
- un ensemble 6 de circuits de sortie en mode télévision, qui reçoit l'information contenue dans la mémoire image 4 telle qu'adressée par l'ensemble 5, en assure la conversion numérique-analogique pour engendrer le signal vidéo télévision destiné au moniteur 7, ainsi que la génération des signaux de synchronisation de télévision classiques.

L'ensemble 1 de circuits de traitement des signaux de vidéo radar reçoit, d'une part, un signal de synchronisation indiquant qu'une impulsion a été émise par le radar et, d'autre part, la vidéo proprement dite, constituée par toutes les réponses à cette impulsions. Cet ensemble 1 comporte principalement un circuit 11 d'échantillonnage du signal (ou des signaux) vidéo analogique reçu, qui assure sa conversion en numérique et le fournit à un ensemble de circuits 12. Les circuits 12 reçoivent en outre, le cas échéant, des signaux vidéo numériques (données de cartographie par exemple) et assurent le mélange et le dosage de toutes ces informations, qu'ils transmettent ensuite à une mémoire 13, dite mémoire radiale complète. La mémoire 13 contient donc le signal vidéo traité et numérisé relatif à une radiale complète ou "pleine portée", c'est-à-dire le signal vidéo affecté à un angle $\theta$ donné, du centre $C_R$ du radar à la limite C (figure 1), et pleine définition. En général, l'ensemble 1 contient deux mémoires radiales complètes, travaillant alternativement en écriture et en lecture ; dans des variantes de réalisation, il peut en contenir davantage.

L'ensemble des circuits représentés sur la figure 3 travaillent sous la commande et la synchronisation d'un circuit de commande, non représenté, réalisé par exemple à l'aide d'un microprocesseur, qui reçoit à la fois les signaux de vidéo radar et les signaux de rotation de l'antenne.

La figure 4 représent un mode de réalisation de l'ensemble de conversion de coordonnées 3 de la figure précédente.

Cet ensemble comporte principalement un ensemble 32 réalisant plus spécifiquement la conversion de coordonnée et, dans un mode préféré de réalisation, en outre un ensemble de circuits 31 traitant le signal vidéo provenant de la mémoire radiale complète (13). Dans ce cas, le trajet du signal vidéo passe, sur la figure 3, par l'intermédiaire de l'ensemble 3 comme illustré par des flèches en pointillé.

L'ensemble 32 a donc pour fonction de fournir des coordonnées cartésiennes (X et Y) à partir des informations de rotation de l'antenne (N et ou directement, comme représenté, $\theta$). Le principe utilisé est celui de l'accumulation : en partant par exemple du point le plus proche du centre radar $C_R$, dont les coordonnées sont fournies à l'ensemble 32, on calcule successivement les coordonnées de chacun des points d'une même radiale. Deux méthodes sont connues : l'accumulation en sinus-cosinus et l'accumulation en tangente.

Par la première méthode, un point $I_i$ d'une radiale $R_i$ (angle $\theta_i$) est déduit du point $I_{i-1}$ ($X_{i-1}$, $Y_{i-1}$) précédent, distant d'un module unitaire ($\rho$ = 1), par les expressions suivantes :

$$I_i \begin{cases} X_i = X_{i-1} + \sin \theta_i \\ Y_i = Y_{i-1} + \cos \theta_i \end{cases}$$

Cette méthode est dite accumulation en sinus et cosinus.

Par la deuxième méthode, dite accumulation en tangente, il faut distinguer selon que $\theta_i$ est inférieur ou supérieur à $\pi/4$ (modulo $\pi/2$) :

- si $0 < \theta \leq 45°$, l'incrément en Y entre $I_{i-1}$ et I est pris égal à l'unité ; on a alors :

$$I_i \begin{cases} X_i = X_{i-1} + \operatorname{tg} \theta \\ Y_i = Y_{i-1} + 1 \end{cases} \tag{1}$$

- si $45° < \theta < 90°$, l'incrément en X entre $I_{i-1}$ et I est pris égal à l'unité ; on a alors :

$$I_i \begin{cases} X_i = X_{i-1} + 1 \\ Y_i = Y_{i-1} + \operatorname{tg} \left(\dfrac{\pi}{2} - \theta\right) \end{cases} \tag{2}$$

4

A titre d'exemple, la suite de la description est faite dans le cas de la deuxième méthode (accumulation en tangente), qui présente certains avantages, notamment d'optimisation, par rapport à la première.

A cet effet, l'ensemble 32 comporte :

- une table 33 des différentes valeurs des fonctions trigonométriques, par exemple tangente, de chacun des angles $\theta_i$ définissant respectivement les n radiales ; cette table est constituée de préférence par une mémoire adressée par exemple par les valeurs successives ($\theta_i$) de l'angle $\theta$ ;
- un premier accumulateur 35, chargé d'élaborer la coordonnée à laquelle il faut faire subir une accumulation en tg $\theta$, c'est-à-dire X dans le premier demi-quadrant et Y dans le deuxième demi-quadrant, modulo $\pi/2$ (cf. expressions (1) et (2) ci-dessus) ; cette coordonnée est notée V ; à cet effet, l'accumulateur 35 reçoit de la table précédente (33) la valeur tg $\theta_i$ ainsi que la valeur d'initialisation, c'est-à-dire la coordonnée (notée $V_o$) du premier point de la radiale visualisée, ou radiale utile ; l'accumulateur 35 est constitué par un additionneur 42 entouré d'un registre d'entrée 41, recevant pour chaque radiale la valeur de tg $\theta_i$, et d'un registre de sortie 43 ; ce dernier registre reçoit la coordonnée initiale $V_o$ ; sa sortie, d'une part, fournit la coordonnée V courante le long de la radiale pendant les accumulations et, d'autre part, est dirigée également vers l'additionneur 42 ;
- un deuxième accumulateur 34, chargé d'élaborer l'autre coordonnée, notée U, à laquelle il faut faire subir une accumulation égale à $+1$, c'est-à-dire Y dans le premier demi-quadrant et X dans le deuxième, modulo $\pi/2$ ; ce deuxième accumulateur peut être constitué simplement par un compteur, recevant comme valeur initiale la coordonnée ($U_o$) du premier point de la radiale ;
- un ensemble de circuits 36, assurant l'adressage en écriture de la mémoire image 4 et l'adressage en lecture de l'ensemble 31 ; à cet effet, il reçoit les coordonnées U et V élaborées par les accumulateurs 34 et 35, ainsi que l'information du demi-quadrant auquel appartient l'angle $\theta_i$ considéré, ce qui lui permet d'élaborer les coordonnées cartésiennes des points de la radiale par rapport au centre radar $C_R$ ; il reçoit également les coordonnées cartésiennes du centre écran $C_E$ afin d'exprimer les coordonnées (X, Y) des points de la radiale par rapport à $C_E$.

L'ensemble 31, interposé sur le trajet de la vidéo, comporte :

- une première mémoire, repérée 48, interposée entre la mémoire radiale complète 13 (de l'ensemble 1) et les circuits de rémanence 2 ; cette mémoire a pour fonction de mémoriser la partie utile (pour la visualisation) de la radiale complète contenue dans la mémoire 13 ;
- une deuxième mémoire, repérée 49, connectée en parallèle à la mémoire 48 ; ces deux mémoires 48 et 49 jouent le même rôle, mais l'une est en phase écriture lorsque l'autre est en phase lecture, et réciproquement ;
- un dispositif 46, dit de regroupement en $\rho$, ayant pour fonction d'opérer une compression de la totalité ou d'une partie de l'information vidéo contenue dans la mémoire radiale complète, par un facteur f convenable pour que la partie de la radiale complète sélectionnée par l'opérateur puisse être visualisée sur l'écran TV ; à titre d'exemple, si la radiale complète comporte 4096 points et si, compte tenu de la position choisie par l'opérateur pour le centre écran $C_E$, l'écran ne peut afficher que 1024 points pour cette radiale, la visualisation de la pleine portée de la radiale initiale implique un facteur de compression d'échelle f = 4 ; dans ce cas, 4 points sont regroupés en un seul, par exemple par une fonction maximum ; le dispositif 46 de regroupement en $\rho$ est donc interposé entre la mémoire radiale complète 13 et les mémoires radiales utiles 48 et 49 ; le regroupement est commandé par un circuit accumulateur 47 qui reçoit le facteur f et les coordonnées d'initialisation, c'est-à-dire celles du premier point de la radiale utile, en coordonnées polaires ; l'accumulateur 47 assure également l'adressage en écriture des mémoires 48 et 49 ; il est par exemple analogue à l'accumulateur 35.

Tous les circuits de l'ensemble 3 représentés sur la figure 4 sont, comme mentionné plus haut, commandés et synchronisés par le dispositif de commande du TDI, qui assure notamment les commandes d'accumulation et la fourniture des valeurs initiales.

En fonctionnement, dans une première étape, il est procédé à la lecture de la mémoire radiale complète 13 et l'écriture de cette information (indice i) dans une mémoire radiale utile , la mémoire 48 par exemple. Dans une deuxième étape, le circuit 36 commande la lecture de cette même mémoire 48 à destination de la mémoire image 4, via les circuits de rémanence 2, en synchronisme avec l'adressage en écriture de cette même mémoire 4. Simultanément, il est procédé, lors de la première étape, à la lecture de la mémoire 49 préalablement inscrite (indice i-1), puis l'écriture de cette même mémoire 49, lors de la deuxième étape.

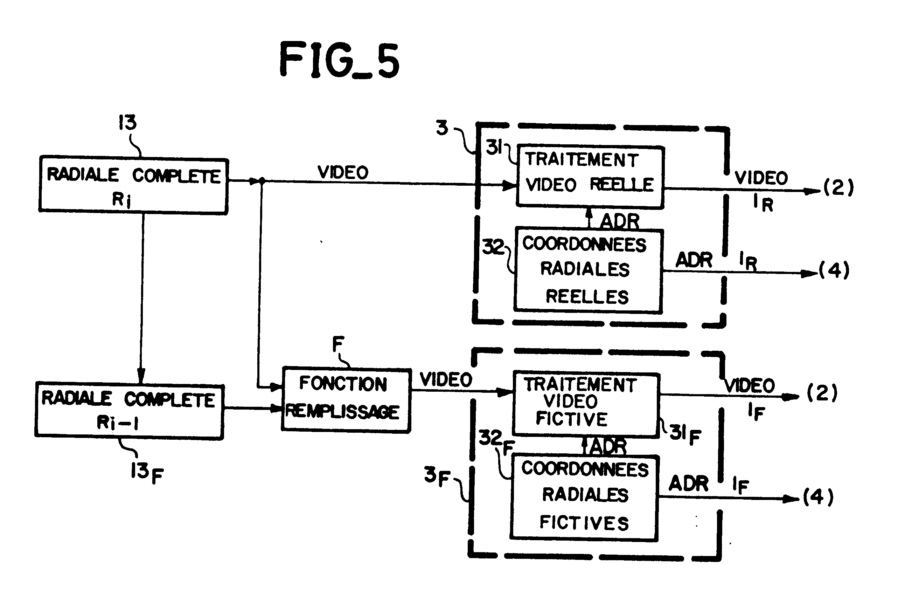

La figure 5 représente un premier mode d'implantation de l'invention.

On rappelle que l'invention a pour but de venir "remplir" les pixels qui ne seraient pas atteints par la conversion des seules radiales réelles. A cet effet, on crée des radiales fictives entre les radiales réelles et à leur affecter à chacune un signal vidéo non nul, fonction du signal vidéo des radiales réelles voisines et, plus précisément, fonction de la valeur des signaux vidéo voisins situés à la même valeur du module $\rho$.

Dans ce premier mode d'implantation, les radiales fictives destinées au remplissage sont créées au niveau des radiales complètes.

Sur la figure 5, on a représenté la mémoire radiale complète 13 de l'ensemble 1, contenant la radiale complète $R_i$, ainsi que l'ensemble 3 avec ses sous-ensembles 31 et 32 tels que décrits figure 4. Les sous-ensembles 31 et 32 fournissent, respectivement, la vidéo et l'adresse correspondante de l'image réelle, notée $I_R$.

Pour réaliser la création des radiales fictives de remplissage, le dispositif comporte en outre une deuxième mémoire radiale complète, repérée $13_F$, qui contient la radiale précédente $(R_{i-1})$. Les deux radiales complètes $R_i$ et $R_{i-1}$ passent ensuite par un circuit F, mélangeant les deux radiales selon une fonction de remplissage prédéfinie et décrite plus loin. Le résultat, qui est donc une radiale complète fictive, est transmis à un ensemble de circuits $3_F$ analogue à l'ensemble 3 mais traitant une radiale fictive et non une radiale réelle. Les différents circuits constitutifs de l'ensemble $3_F$ portent les mêmes références que ceux de l'ensemble 3, mais sont affectés d'un indice F. Cet ensemble $3_F$ se compose donc de deux sous-ensembles $31_F$ et $32_F$ qui fournissent, respectivement, la vidéo et l'adresse correspondante des radiales fictives, notées globalement $I_F$.

Il est à noter qu'à tout instant, la coordonnée $U_R$ de la radiale réelle est la même que la coordonnée $U_F$ de la radiale fictive, puis qu'elle est déduite du même $U_o$ par accumulations successives de la valeur $+1$, donc indépendante de $\theta$. Dans une variante de réalisation, il est alors possible de ne pas doubler complètement le sous-ensemble "coordonnées" (13 et $13_F$), l'accumulateur en U (34, Fig. 4) pouvant être commun.

Le mélange réalisé par le circuit F entre radiale $R_i$ et radiale $R_{i-1}$ pour donner une radiale fictive peut être, par exemple, de trois types : barycentrique, minimum ou maximum. Ceci est réalisé, comme mentionné plus haut, à $\rho$ constant, c'est-à-dire que chacun des points de la radiale $R_i$ est mélangé respectivement à chacun des points de la radiale $R_{i-1}$ situés au même $\rho$, pour donner respectivement les points de la radiale fictive. Le circuit F est un circuit logique ; ce peut être par exemple une mémoire morte du type PROM.

La fonction barycentrique revient à affecter à la radiale fictive une vidéo résultant de la pondération de la vidéo des radiales adjacentes. Si on crée une seule radiale fictive entre deux radiales réelles consécutives $R_{i-1}$ et $R_i$ (remplissage dit de degré 2), la vidéo affectée à la radiale fictive (F) s'écrit :

$$\text{Vidéo (F)} = \tfrac{1}{2}.\ \text{Vidéo } (R_{i-1}) + \tfrac{1}{2}\ \text{Vidéo } (R_i)$$

Si on crée deux radiales fictives entre deux radiales réelles consécutives (remplissage de degré 3), la vidéo de chacune de ces radiales fictives ($F_1$ et $F_2$) s'écrit :

$$\text{Vidéo } (F_1) = \tfrac{2}{3}\ .\ \text{Vidéo } (R_{i-1}) + \tfrac{1}{3}\ .\ \text{Vidéo } (R_i)$$
$$\text{Vidéo } (F_2) = \tfrac{1}{3}\ .\ \text{Vidéo } (R_{i-1}) + \tfrac{2}{3}\ .\ \text{Vidéo } (R_i)$$

Plus généralement, lorsqu'on crée $N - 1$ radiales fictives entre deux radiales réelles consécutives (remplissage de degré N) on obtient, pour la radiale fictive de rang $\underline{k}$ ($F_k$) :

$$\text{Vidéo} (F_k) = \frac{N-k}{N}\ .\ \text{Vidéo} (R_{i-1}) + \frac{k}{N}\ .\ \text{Vidéo} (R_i)$$

Il apparaît que cette première méthode permet de remplir les zones sombres situées entre deux zones brillantes. Il est en outre à noter qu'elle agrandit les zones brillantes réelles. Ceci a pour avantage de réaliser une fonction de filtrage dans le cas où un écho a été manqué par le système, lorsqu'il est entouré de deux échos correctement enregistrés : en effet, le trou ainsi créé pourra être réduit. Inversement, un écho parasite se trouve élargi. Un autre inconvénient de cette méthode est que le pouvoir de séparation de deux échos proches diminue : deux échos distincts risquent en effet de voir leur espacement "rempli".

Une deuxième méthode consiste à affecter aux radiales fictives une vidéo constituée par le maximum des vidéos des radiales réelles voisines :

$$\text{Vidéo } (F_k) = \text{MAX } [\text{Vidéo } (R_{i-1}),\ \text{Vidéo } (R_i)]$$

Selon cette deuxième méthode, on crée $\underline{k}$ radiales fictives entre deux radiales réelles, ces radiales fictives ayant toutes la même vidéo.

Les effets de cette méthode sont une accentuation des avantages et inconvénients de la méthode précédente : les "trous" sont gommés au maximum mais le pouvoir de séparation est encore affaibli.

Une troisième méthode consiste à affecter à la radiale fictive une vidéo résultant du minimum des vidéos des radiales adjacentes :

$$\text{Vidéo } (F_k) = \text{MIN } [\text{Vidéo } (R_{i-1}), \text{Vidéo } (R_i)]$$

Selon cette méthode également, on crée k radiales fictives entre deux radiales réelles, ces radiales fictives ayant la même vidéo. Il apparaît que cette dernière méthode remplit l'intérieur des échos mais n'en élargit pas les bords. Les avantages et inconvénients sont inverses des précédents, c'est-à-dire que la fonction minimum n'élargissant pas les échos, le pouvoir de séparation n'est pas affecté et l'importance des échos parasites n'augmente pas ; par contre, l'effet de filtrage comblant les trous parasites n'est plus obtenu ici.

En outre, les points de deux radiales adjacentes peuvent tomber dans le même pixel. Dans ce cas, ainsi qu'il est connu, soit on ne prend la vidéo que de l'une des radiales, soit on effectue un regroupement des radiales correspondant au même pixel ; dans ce dernier cas, le regroupement se fait en général sous la forme d'une fonction maximum. Ce regroupement a pour effet de renforcer la fonction de filtrage réalisée par les deux premières méthodes : on prend en effet le maximum entre une vidéo nulle pour le trou et non nulle pour les radiales fictives ajoutées. Par contre, lorsqu'on effectue un tel regroupement dans le cadre de la troisième méthode (fonction minimum), un autre avantage de cette troisième méthode apparaît alors, qui est de toujours conserver la priorité des radiales réelles sur les radiales fictives lors du regroupement.

La solution décrite ci-dessus, qui consiste à créer les radiales fictives à partir des radiales complètes, présente l'avantage de disposer de vidéos à priori dans le bon système de coordonnées $(\rho,\theta)$. Elle a l'inconvénient d'une certaine lourdeur à la mise en oeuvre, les radiales complètes représentant des capacités mémoire assez importantes à traiter avec des vitesses élevées ; d'autre part, la suite de la chaîne de traitement est entièrement doublée et ce doublement intervient très tôt dans la chaîne.

La structure représentée figure 5 permet donc de réaliser un remplissage par radiales fictives synchrone, de degré 2. On entend par remplissage synchrone un procédé où les radiales réelles et les radiales fictives sont transmises simultanément à la mémoire image. Pour réaliser un remplissage (synchrone) de degré supérieur, il faut multiplier corrélativement les différents blocs, ce qui devient vite prohibitif du point de vue de l'encombrement et du prix du système. Toutefois le remplissage synchrone présente notamment les avantages suivants :

- les différentes opérations de création de radiales fictives et de conversion de coordonnées étant traitées en parallèle, elles n'introduisent pas de contrainte sur la vitesse de rotation du radar ;
- il n'augmente pas la charge en écriture de la mémoire image par rapport à l'image réelle, sous réserve que la mémoire image comporte un nombre suffisant de blocs (ou boîtiers mémoires) adressables (inscriptibles dans ce cas) indépendamment.

Une autre solution consiste à effectuer un remplissage asynchrone, c'est-à-dire à envoyer les radiales, réelles ou fictives, les unes après les autres à la mémoire image. A cet effet, on mémorise la radiale $R_{i-1}$ puis, lorsque la radiale suivante $(R_i)$ est disponible, on calcule la vidéo et les coordonnées de la radiale fictive de remplissage. Lorsque le remplissage est de degré k (k radiales fictives), on calcule successivement les éléments des k radiales fictives, et on les transmet au fur et à mesure à la mémoire image.

Cette méthode nécessite un temps disponible entre deux radiales réelles qui soit suffisant pour calculer les éléments de la (ou des) radiale(s) fictive(s) ; elle est donc mal adaptée aux radars de vitesse de rotation élevée. En outre, elle augmente la charge en écriture de la mémoire image, qui est multipliée par le dégré (k) du remplissage. En revanche, elle ne nécessite plus l'existence de parties de mémoire (boîtiers) adressables indépendamment.

Selon une variante de réalisation, il est possible de mettre en place une structure permettant le fonctionnement en mode remplissage synchrone de degré 2 et de passer en fonctionnement remplissage asynchrone de degré supérieur lorsque la vitesse de rotation du radar le permet.

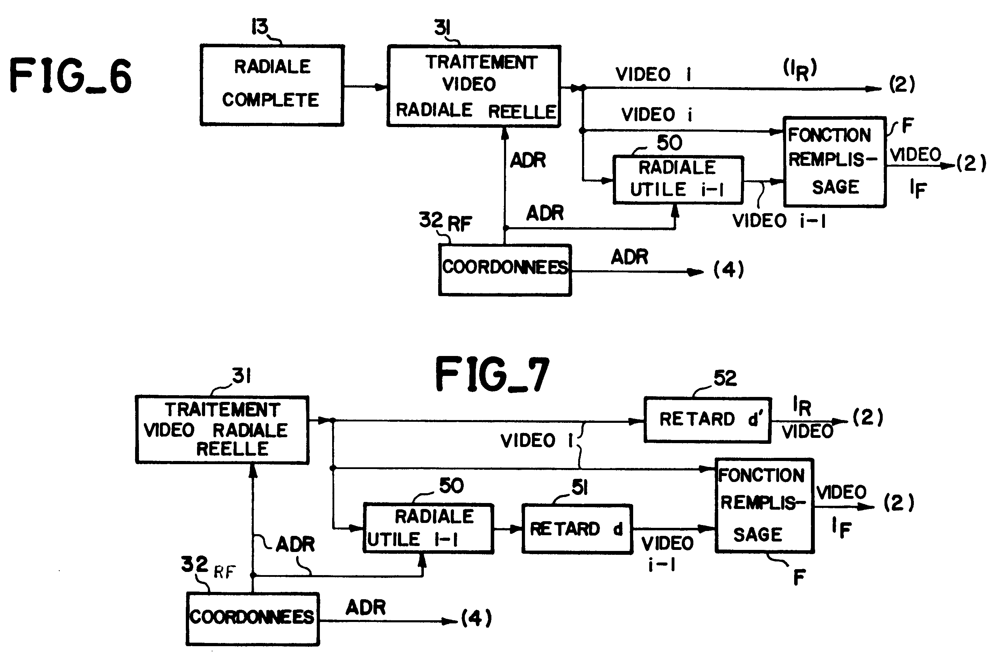

La figure 6 représente un deuxième mode d'implantation de l'invention, dans lequel les radiales fictives sont créées au niveau des radiales utiles et non plus au niveau des radiales complètes.

Sur cette figure, faite à titre d'exemple dans le cas d'un remplissage synchrone de degré 2, on a représenté la mémoire radiale complète 13 et les deux sous-ensembles de l'ensemble 3 de conversion de coordonnées; l'un est repéré 31, comme précédemment, et l'autre est repéré $32_{RF}$ ; en effet, ce dernier est modifié par rapport à celui de la figure 4 pour contenir deux accumulateurs en Y (accumulateur 35), l'un affecté à la radiale réelle et l'autre à la radiale fictive. Le système comporte ici en outre un circuit assurant la fonction de remplissage F, analogue à celui de la figure 5, et une mémoire supplémentaire 50 contenant

la radiale utile $R_{i-1}$, si la radiale utile réelle (vidéo $I_R$) en cours de transmission aux circuits 2 est de rang i.

Les radiales $R_i$ (bloc 31) et $R_{i-1}$ (mémoire 50) sont lues sous la commande du bloc 32, simultanément, au rythme des accumulations et fournies au bloc F, qui comme précédemment fournit un signal vidéo $I_F$ pour la radiale fictive aux circuits 2. La mémoire 50 est connectée de sorte à subir au cours d'un même cycle mémoire une lecture de son contenu (radiale $R_{i-1}$) puis une écriture du contenu (radiale $R_i$) de la mémoire en lecture (48 ou 49) et, ce, au même point de la mémoire 50.

Il apparaît que ce deuxième mode de réalisation permet, par rapport au précédent, un allègement de la structure, puisque seule sont ajoutés une mémoire radiale utile (50), le bloc F et un accumulateur en Y.

Toutefois, lorsque comme décrit ici les accumulations sont faites en tangente, les deux vidéos i et i-1 entrant dans le bloc F sont situées à la même coordonnée U (égale à X ou à Y) et non au même module comme c'est le cas dans la structure de la figure 5. Or, créer un remplissage à partir de points réels situés à un même U (dit ci-après "remplissage à U constant") c'est-à-dire à Y constant jusqu'à 45° puis à X constant après, modulo $\pi/2$, introduit des directions privilégiées et une hétérogénéité du mode de remplissage suivant l'angle : celui-ci est alors correct près des axes mais incorrect près des diagonales. Une correction est donc souhaitable pour que le bloc F engendre une vidéo fictive à partir de points situés à un même $\rho$.

Selon l'invention, cette correction est réalisée en faisant subir un retard d à la vidéo de rang i-1.

Toutefois, pour conserver les avantages du remplissage vis-à-vis de la conversion des coordonnées en tangente, et en particulier l'unicité de la coordonnée U et l'organisation mémoire simplifiée qui s'en déduit, il est préférable de transmettre à la mémoire image des vidéos situés au même U. Le retour de $\rho$ constant à U constant s'effectue de la même façon, en retardant la vidéo de la radiale réelle d'une durée $\underline{d}'$ ; ainsi les deux vidéos présentées à la suite du système se situent-elles au même U.

Cette dernière configuration est illustrée sur la figure 7, qui représente les mêmes éléments que la figure 6 (hors la mémoire 13) auxquels on a ajouté :

- un premier circuit de retard, 51, conférant un retard $\underline{d}$ à la radiale de rang i-1 avant son passage dans le bloc F ;
- un deuxième circuit de retard, 52, conférant un retard $\underline{d}'$ à la radiale réelle de rang i, avant sa transmission aux circuits 2.

Par ailleurs, on constate que les valeurs des retards $\underline{d}$ et $\underline{d}'$ à appliquer changent de signe à chaque demi-quadrant. L'application d'un retard négatif n'étant pas réalisable, une solution consiste à disposer quatre retards variables, avant et après le bloc F, sur chacune des voies radiale réelle/radiale fictive.

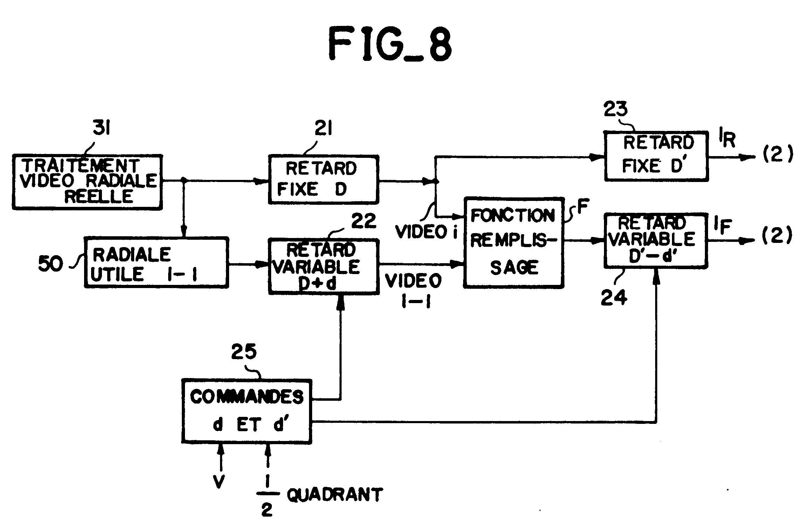

Toutefois, une solution préférée est représentée figure 8, qui consiste à faire subir à la radiale réelle deux retards fixes, avant et après son utilisation pour le remplissage (bloc F), et à la radiale fictive deux retards variables, aux mêmes niveaux. On a représenté sur la figure 8 le bloc de traitement vidéo de la radiale réelle $R_i$ en cours de lecture, la mémoire 50 contenant la radiale utile précédente ($R_{i-1}$) et le bloc F.

Selon cette variante, on interpose, sur le trajet de la vidéo réelle $I_R$, un premier retard fixe, 21, de valeur D et un deuxième retard fixe, 23, de valeur $D'$, de part et d'autre de l'utilisation par le bloc F de cette radiale réelle. Sur le trajet de la vidéo fictive de remplissage, on interpose aux mêmes niveaux deux retards variables, respectivement 22 de valeur $D+d$ et 24 de valeur $D'-d'$ ; les valeurs des retards variables $\underline{d}$ et $\underline{d}'$ sont données par un circuit de commande 25.

Le calcul montre que le retard $\underline{d}$ est donné par :

$$d = \epsilon \cdot V$$

et le retard $\underline{d}'$ par :

$$d' = \varepsilon \cdot \frac{N-k}{N} \cdot V,$$

où $\epsilon$ est l'incrément d'angle et V l'autre coordonnée cartésienne (Y quand U = X et réciproquement), dans le cas d'un remplissage de degré N, pour la $k^{ième}$ radiale.

Cette variante de la figure 8 a pour avantage supplémentaire d'introduire sur la voie des radiales réelles un retard total $(D+D')$ qui est fixe et connu.

Les expressions ci-dessus donnant d et $\underline{d}'$ étant indépendantes de U, le circuit de commande 25 fournissant aux circuits de retard 22 et 24 les valeurs de d et $\underline{d}'$ peut être réalisé à l'aide d'une mémoire morte (ou type PROM par exemple), adressée par V et l'information de demi-quadrant (flèches 26 sur la figure).

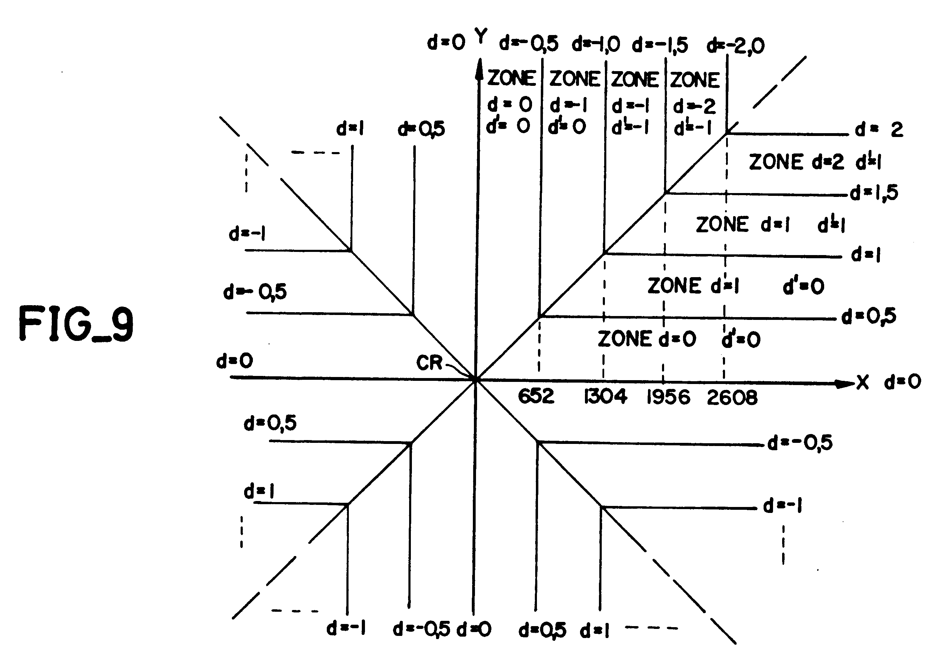

La figure 9 illustre le contenu d'une telle mémoire PROM dans l'exemple de 8192 radiales réelles par tour, avec un remplissage de degré 2. La coordonnée V est égale alternativement à X et Y, comme mentionné plus haut. Les retards $\underline{d}$ et $\underline{d}'$ varient entre zéro et ± Z, par valeurs entières, selon les valeurs de X ou Y.

La description faite ci-dessus l'a été bien entendu à titre d'exemple non limitatif. C'est ainsi qu'on a parlé de visualisation d'informations radar, mais que le procédé de l'invention est applicable à la visualisation de toute information fournie en coordonnées polaires, comme celles qui proviennent d'un sonar, de systèmes d'échographie, etc... C'est ainsi également qu'on a décrit la création de radiales fictives dont la longueur était celle des radiales réelles leur ayant donné naissance : radiales complètes ou radiales utiles ; mais les radiales fictives peuvent bien entendu n'être qu'une fraction de ces radiales réelles, créées par exemple dans les zones périphériques de la portée C (figure 1) où le remplissage est le plus nécessaire.

**Revendications**

1. Transformateur numérique d'image assurant la conversion de coordonnées de l'image, celle-ci étant fournie en coordonnées polaires ($\rho$, $\theta$) sous forme d'une succession de radiales, caractérisées chacunes par un angle polaire ($\theta$) distinct et devant être visualisées en coordonnées cartésiennes sur un écran comportant un nombre prédéfini de points, appelés pixels, le transformateur comportant :
   - au moins une première mémoire radiale (13) pour le stockage d'une radiale réelle ;
   - un ensemble (32) de circuits assurant la conversion de coordonnées polaires en coordonnées cartésiennes ;
   - une mémoire image (4), recevant en données le contenu de la mémoire radiale et en adresses, les coordonnées fournies par l'ensemble de conversion ;
   - des moyens recevant les radiales réelles de rang i et i-1 et fournissant le signal vidéo d'une radiale fictive en fonction des radiales réelles,
   le transformateur étant caractérisé par le fait que les moyens fournissant la radiale fictive sont formés par un ensemble de remplissage (F), cette radiale fictive étant dirigée vers la mémoire image (4); et que le transformateur comporte en outre un premier circuit (51) conférant, à la radiale de rang i-1, un retard variable (d) tel que les signaux reçus par l'ensemble de remplissage (F) appartenant respectivement aux radiales de rang i et i-1 correspondent à des points situés à un même module ($\rho$).

2. Transformateur selon la revendication 1, caractérisé par le fait que la première mémoire radiale (13) assure le stockage d'une radiale complète de rang i, et que le transformateur comporte en outre :
   - une deuxième mémoire radiale (13 F), assurant le stockage d'une radiale réelle complète de rang i-1, l'ensemble de remplissage (F) recevant les radiales réelles de rang i et i-1 ;
   - un deuxième ensemble de conversion ($3_F$), assurant la conversion des coordonnées polaires de la radiale fictive en coordonnées cartésiennes, la radiale fictive étant dirigée vers la mémoire image (4) à l'adresse élaborée par le deuxième ensemble de conversion.

3. Transformateur selon la revendication 1, caractérisé par le fait qu'il comporte en outre :
   - une première mémoire radiale utile (48, 49), assurant le stockage de la partie d'une radiale réelle de rang i, nécessaire à l'affichage, dite radiale utile de rang i ;
   - une deuxième mémoire radiale utile (50), assurant le stockage de la partie d'une radiale réelle de rang i-1, nécessaire à l'affichage, dite radiale utile de rang i-1 ;
   l'ensemble de remplissage (F) recevant les radiales utiles réelles de rang i et i-1 et fournissant le signal vidéo de la radiale utile à destination de la mémoire image à l'adresse élaborée par l'ensemble de conversion.

4. Transformateur selon l'une des revendications précédentes, caractérisé par le fait qu'il comporte un deuxième circuit (52) conférant à la radiale utile réelle de rang i, avant qu'elle ne soit fournie à la mémoire image (4), un deuxième retard variable (d') tel que les signaux vidéos reçus par la mémoire image appartenant respectivement aux radiales réelle et fictive correspondent à des points situés sur une même droite, parallèle à l'un des axes de coordonnées cartésiennes.

5. Transformateur selon l'une des revendications précédentes, caractérisé par le fait qu'il comporte :
   - un premier circuit de retard (21), conférant un premier retard fixe (D) au signal issu de la première mémoire de radiale utile (48, 49) ;

- un deuxième circuit de retard (22), conférant le premier retard fixe (D) plus ledit retard variable (d) au signal issu de la deuxième mémoire de radiale utile (50) ; l'ensemble de remplissage (F) recevant les signaux issus des deux premiers circuits de retard ;
- un troisième circuit de retard (23), conférant un deuxième retard fixe (D') au signal issu du premier circuit de retard (21) ;
- un quatrième circuit de retard (24), conférant le deuxième retard fixe (D') plus le deuxième retard variable (d') au signal issu de l'ensemble de remplissage.

6. Transformateur selon la revendication 5, caractérisé par le fait que ledit retard variable (d) est donné par :

$$d = \epsilon . V$$

et le deuxième retard variable (d') par :

$$d' = \varepsilon . \ \frac{N-K}{N} . V$$

où :
- $\epsilon$ est la valeur de l'incrément d'angle séparant deux radiales réelles ;
- K est le numéro d'ordre de la radiale considérée ;
- N est le degré de remplissage ou nombre de radiales fictives ;
- V est une coordonnée cartésienne, égale à X pour $\theta$ compris entre 0 et 45° et à Y pour $\theta$ compris entre 45° et 90°, avec $\theta$ angle polaire de la radiale considérée et X, Y coordonnées cartésiennes d'un point de la radiale.

**Claims**

1. Digital image converter ensuring the coordinate transformation of the image, the latter being provided in polar coordinates ($\rho$, $\theta$) in the form of a succession of radials each characterised by a distinct polar angle ($\theta$) and having to be visualised in Cartesian coordinates on a screen containing a predefined number of points, called pixels, the converter including:
- at least one first radial memory (13) for storing a real radial;
- an assembly (32) of circuits ensuring the transformation of polar coordinates into Cartesian coordinates;
- an image memory (4) receiving, as data, the contents of the radial memory and, as addresses, the coordinates provided by the transformation assembly;
- means receiving the real radials of rank i and i-1 and providing the video signal of a dummy radial as a function of the real radials,
the converter being characterised in that the means providing the dummy radial are formed by a filling assembly (F), this dummy radial being directed towards the image memory (4); and in that the converter further includes a first circuit (51) imparting, to the radial of rank i-1, a variable delay (d) such that the signals received by the filling assembly (F) belonging to the radials of rank i and i-1 respectively correspond to points situated at the same modulus ($\rho$).

2. Converter according to Claim 1, characterised in that the first radial memory (13) ensures the storing of a complete radial of rank i, and in that the converter further includes:
- a second radial memory (13 F), ensuring the storing of a complete real radial of rank i-1, the filling assembly (F) receiving the real radials of rank i and i-1;
- a second transformation assembly ($3_F$), ensuring the transformation of the polar coordinates of the dummy radial into Cartesian coordinates, the dummy radial being directed towards the image memory (4) at the address formulated by the second transformation assembly.

3. Converter according to Claim 1, characterised in that it further includes:
- a first useful radial memory (48, 49), ensuring the storing of that part of a real radial of rank i required for display and referred to as the useful radial of rank i;

- a second useful radial memory (50), ensuring the storing of that part of a real radial of rank i-1 required for display and referred to as the useful radial of rank i-1;

the filling assembly (F) receiving the real useful radials of rank i and i-1 and providing the video signal of the useful radial heading for the image memory at the address formulated by the transformation assembly.

4. Converter according to one of the preceding claims, characterised in that it includes a second circuit (52) imparting to the real useful radial of rank i, before the latter is provided to the image memory (4), a second variable delay (d') such that the video signals received by the image memory belonging to the real and dummy radials respectively correspond to points situated on the same straight line, parallel to one of the Cartesian coordinate axes.

5. Converter according to one of the preceding claims, characterised in that it includes:
   - a first delay circuit (21) imparting a first fixed delay (D) to the signal output by the first useful radial memory (48, 49);
   - a second delay circuit (22) imparting the first fixed delay (D) plus the said variable delay (d) to the signal output by the second useful radial memory (50); the filling assembly (F) receiving the signals output by the first two delay circuits;
   - a third delay circuit (23) imparting a second fixed delay (D') to the signal output by the first delay circuit (21);
   - a fourth delay circuit (24) imparting the second fixed delay (D') plus the second variable delay (d') to the signal output by the filling assembly.

6. Converter according to Claim 5, characterised in that the said variable delay (d) is given by:

$$d = \epsilon . V$$

and the second variable delay (d') by:

$$d' = \epsilon . \frac{N-K}{N} . V$$

where:
   - $\epsilon$ is the value of the increment of angle separating two real radials;
   - K is the serial number of the relevant radial;
   - N is the degree of fill or number of dummy radials;
   - V is a Cartesian coordinate, equal to X for $\theta$ between 0 and 45° and to Y for $\theta$ between 45° and 90°, with $\theta$ the polar angle of the relevant radial and X, Y the Cartesian coordinates of a point of the radial.

**Patentansprüche**

1. Digitaler Bildwandler, der die Umwandlung der Koordinaten eines Bildes ausführt, welches in Polarkoordinaten ($\rho$, $\theta$) in Form einer Abfolge von Radialstrahlen, die jeweils durch einen unterschiedlichen klaren Winkel ($\theta$) gekennzeichnet sind, geliefert wird und auf einem Bildschirm, der eine vorbestimmte Anzahl von Punkten, sogenannte Pixel besitzt, in kartesischen Koordinaten angezeigt werden soll, wobei der Wandler umfaßt:
   - wenigstens einen ersten Radialstrahl-Speicher (13) zur Speicherung eines reellen Radialstrahls;
   - eine Gruppe (32) von Schaltungen, die die Umwandlung der Polarkoordinaten in kartesische Koordinaten ausführen;
   - einen Bildspeicher (4), der als Daten den Inhalt des Radialstrahl-Speichers und als Adressen die von der Umwandlungsgruppe gelieferten Koordinaten empfangt;
   - Mittel, die die reellen Radialstrahlen der Ordnungszahlen i und i-1 empfangen und in Abhängigkeit von den reellen Radialstrahlen das Videosignal eines fiktiven Radialstrahls liefern,

   wobei der Wandler dadurch gekennzeichnet ist, daß die den fiktiven Radialstrahl liefernden Mittel von einer Fülleinrichtung (F) gebildet werden, wobei dieser fiktive Radialstrahl zum Bildspeicher (4) geleitet wird; und daß der Wandler außerdem eine erste Schaltung (51) umfaßt, die dem Radialstrahl der Ordnungszahl i- 1 eine variable Verzögerung (d) verleiht, derart, daß die von der Fülleinrichtung (F) empfangenen Signale, die den Radialstrahlen der Ordnungszahlen i bzw. i-1 zugehören, Punkten entsprechen, die in dem gleichen Abstand ($\rho$) vom Ursprung liegen.

2. Wandler gemäß Anspruch 1, dadurch gekennzeichnet, daß der erste Radialstrahl-Speicher (13) die Speicherung eines vollständigen Radialstrahls der Ordnungszahl i ausführt und daß der Wandler außerdem umfaßt:

- einen zweiten Radialstrahl-Speicher (13 F), der die Speicherung eines vollständigen reellen Radialstrahls der Ordnungszahl i- 1 ausführt, wobei die Fülleinrichtung (F) die reellen Radialstrahlen der Ordnungszahlen i und i-1 empfängt;
- eine zweite Umwandlungsgruppe ($3_F$), die die Umwandlung der Polarkoordinaten der fiktiven Radialstrahlen in kartesische Koordinaten ausführt, wobei der fiktive Radialstrahl zum Bildspeicher (4) an die von der zweiten Umwandlungsgruppe entwickelte Adresse geleitet wird.

3. Wandler gemäß Anspruch 1, dadurch gekennzeichnet, daß er außerdem umfaßt:

- einen ersten Nutzradialstrahl-Speicher (48, 49), der die Speicherung desjenigen Teils eines reellen Radialstrahls der Ordnungszahl i ausführt, der für die Anzeige erforderlich ist und Nutzradialstrahl der Ordnungszahl i genannt wird;
- einen zweiten Nutzradialstrahl-Speicher (50), der die Sicherung desjenigen Teils eines reellen Radialstrahls der Ordnungszahl i-1 ausführt, der für die Anzeige erforderlich ist und Nutzradialstrahl der Ordnungszahl i-1 genannt wird;
wobei die Fülleinrichtung (F) die reellen Nutzradialstrahlen der Ordnungszahlen i und i-1 empfängt und an den Bildspeicher an die von der Umwandlungsgruppe entwickelte Adresse das Videosignal des Nutzradialstrahls ausgibt.

4. Wandler gemäß Anspruch einem der vorangehenden Ansprüche, dadurch gekennzeichnet, daß er eine zweite Schaltung (52) umfaßt, die dem reellen Radialstrahl mit Rang i eine zweite variable Verzögerung (d') verleiht, bevor er an den Bildspeicher (4) ausgegeben wird, derart, daß die vom Bildspeicher empfangenen Videosignale, die den reellen und fiktiven Radialstrahlen zugehören, Punkten entsprechen, die sich auf derselben Geraden befinden, die zu einer der kartesischen Koordinatenachsen parallel ist.

5. Wandler gemäß einem der vorangehenden Ansprüche, dadurch gekennzeichnet, daß er umfaßt:

- eine erste Verzögerungsschaltung (21), die dem vom ersten Nutzradialstrahl-Speicher (48, 49) ausgegebenen Signal eine erste konstante Verzögerung (D) verleiht;
- eine zweite Verzögerungsschaltung (22), die dem vom zweiten Nutzradialstrahl-Speicher (50) ausgegebenen Signal die erste konstante Verzögerung (D) und zusätzlich die genannte variable Verzögerung (d) verleiht; wobei die Fülleinrichtung (F) die von den beiden ersten Verzögerungsschaltungen ausgegebenen Signale empfangt;
- eine dritte Verzögerungsschaltung (23), die dem von der ersten Verzögerungsschaltung (21) ausgegebenen Signal eine zweite konstante Verzögerung (D') verleiht;
- eine vierte Verzögerungsschaltung (24), die dem von der Fülleinrichtung ausgegebenen Signal die zweite konstante Verzögerung (D') und zusätzlich die zweite variable Verzögerung (d') verleiht.

6. Wandler gemäß Anspruch 5, dadurch gekennzeichnet, daß die variable Verzögerung (d) gegeben ist durch:

$$d = \epsilon \cdot V$$

und die zweite variable Verzögerung (d') gegeben ist durch:

$$d' = \epsilon \cdot ((N-K)/N) \cdot V$$

wobei:

- $\epsilon$ der Wert des Inkrementwinkels zwischen zwei reellen Radialstrahlen ist;
K die Ordnungszahl des betrachteten Radialstrahls ist;

- N der Füllgrad oder die Anzahl der fiktiven Radialstrahlen ist;
- V eine kartesische Koordinate ist, die gleich X ist, wenn $\theta$ zwischen 0 und 45° liegt, und gleich Y ist, wenn $\theta$ zwischen 45° und 90° liegt, wobei $\theta$ der Polarwinkel des betrachteten Radialstrahls ist und X, Y die kartesischen Koordinaten eines Punktes des Radialstrahls sind.

FIG_1

FIG_2

# FIG_3

VIDEO NUM·

VIDEOS ANALOG· (P) → ECHANTIL-LONNAGE → MELANGE DOSAGE → MEMOIRE RADIALE COMPLETE → VIDEO → REMANENCE (2)

ROTATION { N, ε } → CONVERSION DE COOR-DONNEES (3) → ADRESSAGE ECRITURE → MEMOIRE IMAGE (4) ← ADRESSAGE LECTURE ← LECTURE EN MODE TV (5)

MEMOIRE IMAGE → CIRCUITS DE SORTIE TV (6) → VISUALI-SATION TV (7)

VIDEO

EP 0 233 095 B1

# FIG_4

# FIG_5

RADIALE COMPLETE $R_i$ — 13

VIDEO

3 — 31 — TRAITEMENT VIDEO REELLE — VIDEO — (2) $I_R$

ADR

32 — COORDONNEES RADIALES REELLES — ADR — $I_R$ — (4)

RADIALE COMPLETE $R_{i-1}$ — $13_F$

F — FONCTION REMPLISSAGE — VIDEO

$3_F$ — $32_F$ — TRAITEMENT VIDEO FICTIVE — VIDEO — (2) $I_F$ — $31_F$

ADR

COORDONNEES RADIALES FICTIVES — ADR — $I_F$ — (4)

EP 0 233 095 B1

**FIG_6**

- 13 RADIALE COMPLETE
- 31 TRAITEMENT VIDEO RADIALE REELLE
- VIDEO I → (I_R) → (2)
- VIDEO i
- 50 RADIALE UTILE i-1
- FONCTION REMPLIS-SAGE → F, VIDEO → (2), I_F
- VIDEO i-1
- ADR
- 32 RF COORDONNEES → ADR → (4)

**FIG_7**

- 31 TRAITEMENT VIDEO RADIALE REELLE
- 52 RETARD d' → I_R VIDEO → (2)
- VIDEO I
- 50 RADIALE UTILE I-1
- 51 RETARD d → VIDEO i-1
- FONCTION REMPLIS-SAGE → VIDEO → (2), I_F, F
- ADR
- 32 RF COORDONNEES → ADR → (4)

EP 0 233 095 B1

# FIG_8

EP 0 233 095 B1

FIG_9